# EUROPEAN PATENT SPECIFICATION

(11) **EP 4 363 800 B1**
(45) Date of publication and mention of the grant of the patent: **15.04.2026**
(21) Application number: 22833766.3
(22) Date of filing: 10.05.2022
(51) Int. Cl.: G01C 21/30, G01C 21/00, G06T 7/136, G06T 7/73, G06T 7/579, G06T 17/00, G06F 18/40

(54) **SERVER AND METHOD FOR GENERATING ROAD MAP DATA**
SERVER UND VERFAHREN ZUR ERZEUGUNG VON STRASSENKARTENDATEN
SERVEUR ET PROCÉDÉ DE GÉNÉRATION DE DONNÉES DE CARTES ROUTIÈRES

(30) Priority: 30.06.2021 SG 10202107187S
(43) Date of publication of application: 08.05.2024
(73) Proprietor: Grabtaxi Holdings Pte. Ltd., Singapore 138498 (SG)
(72) Inventor: KANDAL, Philipp, Wolfgang, Josef, Singapore 098414 (SG); HUANG, Xiaocheng, Singapore 018937 (SG); MARGIN, Adrian, Ioan, Cluj- Napoca (RO); WANG, Guanfeng, Singapore 534075 (SG)
(74) Representative: Viering, Jentschura & Partner mbB Patent- und Rechtsanwälte
(86) International application number: PCT/SG2022/050289
(87) International publication number: WO 2023/277791

(56) References cited:
- CN-A- 112 651 997
- US-A1- 2019 204 090
- US-A1- 2019 392 635
- US-A1- 2019 392 635
- US-A1- 2020 050 854
- US-A1- 2020 109 954
- US-A1- 2022 228 886
- US-B2- 10 401 500

## Description

### TECHNICAL FIELD

Various aspects of this disclosure relate to a server configured for generating road map data. Various aspects of this disclosure relate to a method for generating road map data. Various aspects of this disclosure relate to a non-transitory computer-readable medium storing computer executable code for generating road map data. Various aspects of this disclosure relate to a computer executable code for generating road map data.

### BACKGROUND

The quality of an e-hailing service which enables customers to hail taxis using their smartphones largely depends on the underlying map data which is for example used for estimating the time when the driver will be there to pick up the user, a price of the ride and how long it will take to get to the destination. Machine learning models may be used to automatically generate map data from images, e.g. to recognize points of interest, street names, etc. However, for having a machine learning model that may reliably process images for map data generation, training images are necessary for training the machine learning models.

Traditional image acquisition for map making use expensive specialized equipment, where the cameras are in an elevated position and multiple cameras from different angles are used in order to not miss any map features (e.g. Storefront signs, Traffic signs, lane markings). An example of traditional image acquisition is disclosed in US 2019/0 392 635 A1. The challenge with this traditional approach is that often the high cost per km in capturing this data.

Another approach is instead to rely on lower end cameras and instead of covering a road once with super high-end and expensive equipment to use lower cost cameras but often cover the same road multiple times. The challenge with this approach is that the images are often captured via non-360 cameras so certain features are missing (e.g. storefront logos that are important to detect points of interests as map features). The lower vantage of camera point may also lead to blocked features, leading to potentially missing crucial data for accurate map generation.

### SUMMARY

Therefore, there may be a need to provide a system to accurately generate map data from training images. There may also be a need for the system to determine if details that are crucial for mapmaking are potential missing.

The invention is laid out in the appended set of claims.

To the accomplishment of the foregoing and related ends, the one or more embodiments include the features hereinafter fully described and particularly pointed out in the claims. The following description and the associated drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The invention will be better understood with reference to the detailed description when considered in conjunction with the non-limiting examples and the accompanying drawings, in which:
FIG. 1 shows a flowchart of a method for managing orders according to various embodiments.
FIG. 2 shows a schematic diagram of a system for generating road map data according to various embodiments.
FIG. 3 shows an exemplary diagram of an image acquisition apparatus for generating road map data according to various embodiments.

### DETAILED DESCRIPTION

The following detailed description refers to the accompanying drawings that show, by way of illustration, specific details and embodiments in which the invention may be practiced. These embodiments are described in sufficient detail to enable those skilled in the art to practice the invention. Other embodiments may be utilized and structural, and logical changes may be made without departing from the scope of the invention. The various embodiments are not necessarily mutually exclusive, as some embodiments can be combined with one or more other embodiments to form new embodiments.

Embodiments described in the context of one of the systems or server or methods or computer program are analogously valid for the other systems or server or methods or computer program and vice-versa.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

The word "exemplary" is used herein to mean "serving as an example, instance, or illustration." Any embodiment or design described herein as "exemplary" is not necessarily to be construed as preferred or advantageous over other embodiments or designs
In the context of various embodiments, the articles "a", "an", and "the" as used with regard to a feature or element include a reference to one or more of the features or elements.

As used herein, the term "and/or" includes any and all combinations of one or more of the associated listed items.

The terms "at least one" and "one or more" may be understood to include a numerical quantity greater than or equal to one (e.g., one, two, three, four, [...], etc.). The term "a plurality" may be understood to include a numerical quantity greater than or equal to two (e.g., two, three, four, five, [...], etc.).

The words "plural" and "multiple" in the description and the claims expressly refer to a quantity greater than one. Accordingly, any phrases explicitly invoking the aforementioned words (e.g. "a plurality of [objects]", "multiple [objects]") referring to a quantity of objects expressly refers more than one of the said objects. The terms "group (of)", "set [of]", "collection (of)", "series (of)", "sequence (of)", "grouping (of)", etc., and the like in the description and in the claims, if any, refer to a quantity equal to or greater than one, i.e. one or more. The terms "proper subset", "reduced subset", and "lesser subset" refer to a subset of a set that is not equal to the set, i.e. a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term data, however, is not limited to the aforementioned examples and may take various forms and represent any information as understood in the art.

The term "processor" or "controller" as, for example, used herein may be understood as any kind of entity that allows handling data, signals, etc. The data, signals, etc. may be handled according to one or more specific functions executed by the processor or controller.

A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The term "system" (e.g., a drive system, a position detection system, etc.) detailed herein may be understood as a set of interacting elements, the elements may be, by way of example and not of limitation, one or more mechanical components, one or more electrical components, one or more instructions (e.g., encoded in storage media), one or more controllers, etc.

A "circuit" as user herein is understood as any kind of logic-implementing entity, which may include special-purpose hardware or a processor executing software. A circuit may thus be an analog circuit, digital circuit, mixed-signal circuit, logic circuit, processor, microprocessor, Central Processing Unit ("CPU"), Graphics Processing Unit ("GPU"), Digital Signal Processor ("DSP"), Field Programmable Gate Array ("FPGA"), integrated circuit, Application Specific Integrated Circuit ("ASIC"), etc., or any combination thereof. Any other kind of implementation of the respective functions which will be described below in further detail may also be understood as a "circuit." It is understood that any two (or more) of the circuits detailed herein may be realized as a single circuit with substantially equivalent functionality, and conversely that any single circuit detailed herein may be realized as two (or more) separate circuits with substantially equivalent functionality. Additionally, references to a "circuit" may refer to two or more circuits that collectively form a single circuit.

As used herein, "memory" may be understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, it is appreciated that registers, shift registers, processor registers, data buffers, etc., are also embraced herein by the term memory. It is appreciated that a single component referred to as "memory" or "a memory" may be composed of more than one different type of memory, and thus may refer to a collective component including one or more types of memory. It is readily understood that any single memory component may be separated into multiple collectively equivalent memory components, and vice versa. Furthermore, while memory may be depicted as separate from one or more other components (such as in the drawings), it is understood that memory may be integrated within another component, such as on a common integrated chip.

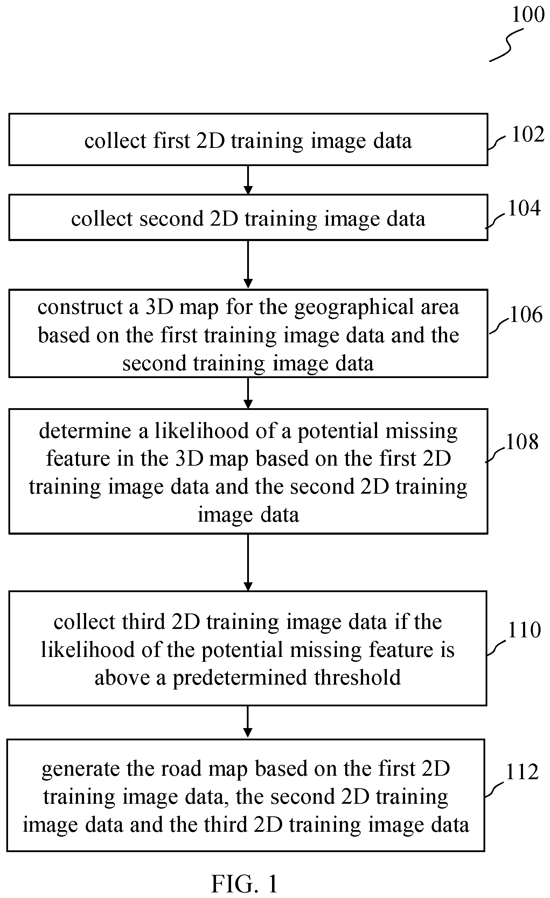

FIG. 1 shows a flowchart of a method for generating road map data according to various embodiments.

According to various embodiments, the method 100 of generating road map data may be provided. In some embodiments, the method 100 may include a step 102 of using one or more processor(s) of a system to collect first 2D training image data comprising first map images of a geographical area acquired by one or more image acquisition apparatus. The method 100 may include a step 104 of using the one or more processor(s) to collect second 2D training image data comprising second map images of the geographical area acquired by the one or more image acquisition apparatus.

In some embodiments, the method 100 may include a step 106 of using the one or more processor(s) to construct a 3D map for the geographical area based on the first training image data and the second training image data. The method 100 may include a step 108 of using the one or more processor(s) to determine a likelihood of a potential missing feature in the 3D map based on the first 2D training image data and the second 2D training image data.

In some embodiments, the method 100 may include a step 110 of using the one or more processor(s) to collect third 2D training image data comprising third map images of the geographical area acquired by the one or more image acquisition apparatus if the likelihood of the potential missing feature is above a predetermined threshold. The method 100 may include a step 112 of using the one or more processor(s) to generate the road map based on the first 2D training image data, the second 2D training image data and the third 2D training image data.

Steps 102 to 112 are shown in a specific order, however other arrangements are possible. Steps may also be combined in some cases. Any suitable order of steps 102 to 112 may be used.

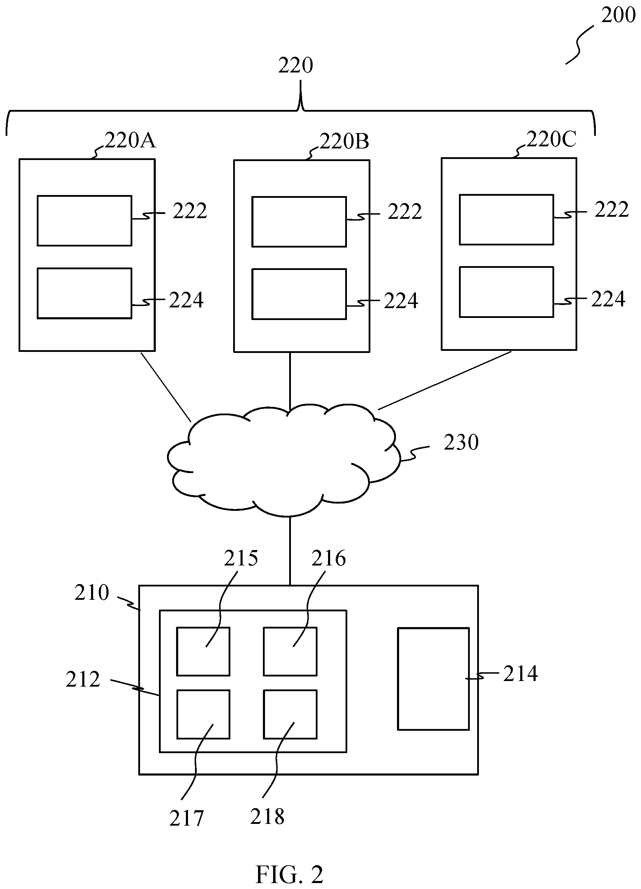

FIG. 2 shows a schematic diagram of a system configured for generating road map data according to various embodiments.

According to various embodiments, the communication system 200 may include a server 210, and/or one or more image acquisition apparatus 220 (e.g., 220A, 220B,220C).

In some embodiments, the server 210 and the one or more image acquisition apparatus 220 may be in communication with each other through communication network 230. Even though FIG. 2 shows lines connecting the server 210, and the one or more image acquisition apparatus 220, to the communication network 230, in some embodiments, the server 210, and the one or more image acquisition apparatus 220, may not be physically connected to each other, for example through a cable. Instead, the server 210, and the one or more image acquisition apparatus 220 may be able to communicate wirelessly through communication network 230 by internet communication protocols or through a mobile cellular communication network.

In various embodiments, the server 210 may be a single server as illustrated schematically in FIG. 2, or have the functionality performed by the server 210 distributed across multiple server components. The server 210 may include one or more server processor(s) 212. The various functions performed by the server 210 may be carried out by the one or more server processor(s) 212. In some embodiments, the various functions performed by the server 210 may be carried out across the one or more server processor(s). In other embodiments, each specific function of the various functions performed by the server 210 may be carried out by specific server processor(s) of the one or more server processor(s).

In some embodiments, the server 210 may include a database 214. The server 210 may also include a memory 216. The database 214 may be in or may be the memory 216. The memory 216 and the database 214 may be one component or may be separate components. The memory 216 of the server may include computer executable code defining the functionality that the server 210 carries out under control of the one or more server processor 212. The database 214 and/or memory 216 may include image training data, map images, generated map data, 2D and 3D map related data or images. The memory 216 may include or may be a computer program product such as a non-transitory computer-readable medium.

In some embodiments, the memory 216 may be part of the one or more server processor(s) 212. In some embodiments, the one or more server processor(s) 212 may also include a neural network processor 215, a decision-making processor 217 and a map generation processor 218.

According to various embodiments, a computer program product may store the computer executable code including instructions for generating road map data according to the various embodiments. The computer executable code may be a computer program. The computer program product may be a non-transitory computer-readable medium. The computer program product may be in the communication system 100 and/or the server 210.

In some embodiments, the server 210 may also include an input and/or output module allowing the server 210 to communicate over the communication network 230. The server 210 may also include a user interface for user control of the server 210. The user interface may include, for example, computing peripheral devices such as display monitors, user input devices, for example, touchscreen devices and computer keyboards.

In various embodiments, the one or more image acquisition apparatus 220 may include a one or more image acquisition apparatus memory 222 and one or more image acquisition apparatus processor 224. The one or more image acquisition apparatus memory 222 may include computer executable code defining the functionality the one or more image acquisition apparatus 220 carries out under control of the one or more image acquisition apparatus processor 224. The one or more image acquisition apparatus memory 222 may include or may be a computer program product such as a non-transitory computer-readable medium. The one or more image acquisition apparatus 220 may also include an input and/or output module allowing the one or more image acquisition apparatus 220 to communicate over the communication network 230. The one or more image acquisition apparatus 220 may also include a user interface for the user to control the one or more image acquisition apparatus 220. The user interface may include a display monitor, and/or buttons.

In various embodiments, the communication system 200 may include one or more image acquisition apparatus 220. For the sake of brevity, duplicate descriptions of features and properties are omitted.

In various embodiments, the one or more image acquisition apparatus 220, for example a first image acquisition apparatus 220, a second image acquisition apparatus 220B and a third image acquisition apparatus 220C may be the same camera or from the same manufacturer. Advantageously, by having the same or similar properties may make it easier for the system 100 to construct 3D images from 2D images.

In various embodiments, the server 210 may be configured for generating road map data.

In various embodiments, the neural network processor 215 may determine first 2D training image data using one or more neural networks. The input for the neural network may be first map images of a geographical area acquired by one or more image acquisition apparatus 220. In various embodiments, the neural network processor 215 may determine second 2D training image data using one or more neural networks. The input for the neural network may be second map images of a geographical area acquired by one or more image acquisition apparatus 220.

In various embodiments, the map generation processor 218 may construct a 3D map for the geographical area based on the first training image data and the second training image data.

In various embodiments, the map generation processor 218 may construct a 3D map by applying Structure from Motion (SfM) algorithms on the 2D images to recreate 3D understanding of the roads. In various embodiments, if two images are too far apart, the processor 218 may split one recording of 2D images in multiple trips to have better reconstruction of 2D images into 3D.

In various embodiments, the decision-making processor 217 may determine a likelihood of a potential missing feature in the 3D map based on the first 2D training image data and the second 2D training image data.

In various embodiments, the map generation processor 218 may generate the road map based on the first 2D training image data, the second 2D training image data and the third 2D training image data.

In various embodiments, based on the 3D reconstruction, the system 100 may calculate "completeness" and "blind spots" (e.g. if something is obstructing the view or outside of the field of view of the camera).

In various embodiments, the system 100 may calculate a map quality score per road .segment

In various embodiments, the images may be aggregated across multiple trips on the same road segment to see whether a "blind spot" in one recording is captured in another recording by the one or more image acquisition apparatus 220. In various embodiments, the data in the same area (i.e. not only across trips but by geo-proximity) may be aggregated before construction of the 3D map. In various embodiments, visual positioning, (i.e. image proximity) may be used when constructing the 3D map.

In various embodiments, the system 100 may use an algorithm to decide the probability of signs or important map features based on location based on probability of sign positioning in real world. The system may give more important to blind spots at intersections compared a blindspot in the middle of a road segment.

In various embodiments, the system 100 may output an overlay of the road-network where information such as locations with good coverage / high quality (i.e. low blindspots) and locations with potential gaps (i.e., missing features) in the 3D map is known.

In various embodiments, if the likelihood of the potential missing feature is above a predetermined threshold, the neural network processor 215 may determine third 2D training image data using one or more neural networks. The input for the neural network may be third map images of a geographical area acquired by one or more image acquisition apparatus 220.

In various embodiments, based on the likelihood of the potential missing feature, the system 100 may target specific sections for re-recording (e.g., if they are high importance areas). The re-recording may be done using at least one of: using higher end equipment, or get more recordings of using the same equipment for higher coverage or send human surveyors for fill in the missing details.

In various embodiments, the system 100 may wait until more data is uploaded by other vehicles with cameras passing by before reconstructing the 3D map. In some embodiment, the system 100 may accept the quality risks (if e.g. low importance area).

In various embodiments, the system 100 may recollect areas with low coverage scores. The system may recalculate the scores upon recollection. The system 100 may have an automated process decide whether to recollect with low quality cameras or to assign a segment for high-quality / manual collection.

Advantageously, the system disclosed herein allows for a more 90% map coverage with low cost / lower quality cameras (or possibly using multiple iterations on the same segment) and only in some areas using manual surveying or high-end equipment to cover gaps in coverage, which increases the accuracy of the map generation and lowers the cost of map generation.

The one or more image acquisition apparatus 220 includes at least one of a first image acquisition apparatus 220A, a second image acquisition apparatus 220B and a third image acquisition apparatus 220C. The first map images are acquired by the first image acquisition apparatus 220A. The second map images are acquired by the second image acquisition apparatus 220B. The third map images are acquired by the third image acquisition apparatus 220C.

At least one of the first image acquisition apparatus 220A and the second image acquisition apparatus 220B acquires images at a lower image resolution than the third image acquisition apparatus 220C. In some embodiments, the third image acquisition apparatus may be a 3D camera.

In some embodiments, the one or more server processor(s) 212 may use sensor data to identify a first position of the first image acquisition apparatus 220A and/or a second position of the second image acquisition apparatus 220B. The sensor data may include a first sensor data for the first image acquisition apparatus 220A and/or a second sensor data for the second image acquisition apparatus 220B. In some embodiments, the one or more server processor(s) 212 may determine a difference between the first position and the second position.

In some embodiments, the one or more server processor(s) 212 may review the positions of the pictures and may and use sensor data and image data identify the camera position in the real 3D space and establish "ground control points".

In some embodiments, the map generation processor 218 may construct the 3D map for the geographical area based on the first 2D training image data, the second 2D training image data and the difference between the first position and the second position.

In some embodiments, the decision-making processor 217 may compare the 3D map with a groundtruth map to determine the likelihood of the potential missing feature. The groundtruth map may be stored in the memory 216. The 3D map may be compared with the groundtruth (e.g. to understand if there should be a building at a certain point or not). In some embodiments, this may also identify areas that are not covered or obstructed.

In some embodiments, the groundtruth map may be e.g. OpenStreetMap or any previously generated map. This groundtruth map may not be fully accurate, however, some features like e.g. existing roads have high level of accuracy, which may serve as an accurate point of comparison.

In some embodiments, the potential missing feature may be one of: a building, a traffic sign or a traffic light.

In some embodiments, the one or more image acquisition apparatus 220 may be mounted onto one or more vehicles or one or more drivers of the one or more vehicles, e.g., on a helmet worn by the one or more drivers.

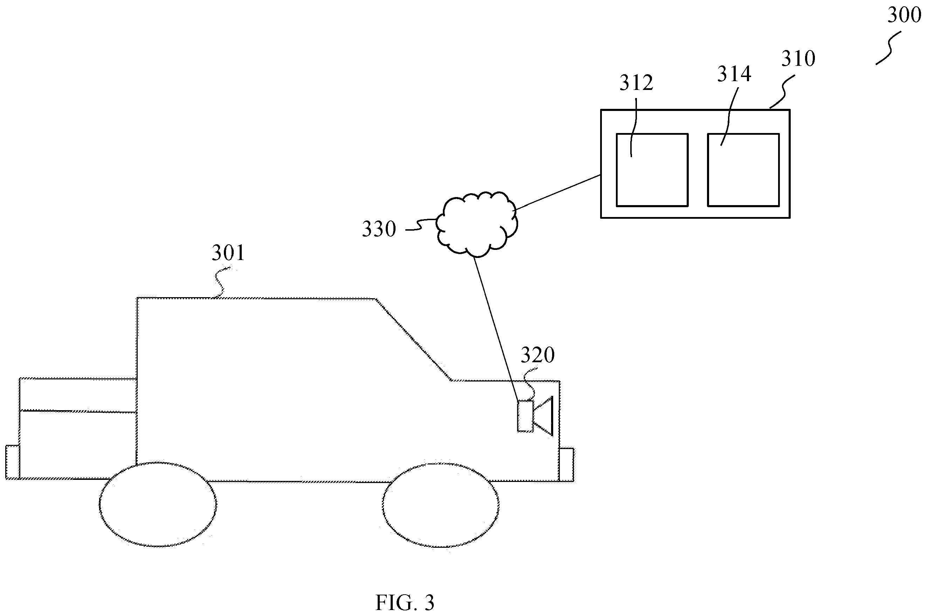

FIG. 3 shows an exemplary diagram 300 of an image acquisition apparatus for generating road map data according to various embodiments.

In the exemplary diagram 300, an image acquisition apparatus 320 is mounted on a vehicle 301.

In various embodiments, the image acquisition apparatus 320 may send map images of a geographical area to the server 310 for the server processor 312 to process as training image data as well as to generate road maps. The road maps may be stored in a memory 314 of the server 310.

In various embodiments, the image acquisition apparatus 320 may communicate with the server 310 through a communication network 330.

In various embodiments the server processor 312 may determine first 2D training image data using one or more neural networks. The input for the neural network may be first map images of a geographical area. In various embodiments, the neural network processor 215 may determine second 2D training image data using one or more neural networks. The input for the neural network may be second map images of a geographical area. In various embodiments, the the server processor 312 may construct a 3D map for the geographical area based on the first training image data and the second training image data. In various embodiments, the server processor 312 may determine a likelihood of a potential missing feature in the 3D map based on the first 2D training image data and the second 2D training image data. In various embodiments, if the likelihood of the potential missing feature is above a predetermined threshold, the server processor 312 may determine third 2D training image data using one or more neural networks. The input for the neural network may be third map images of a geographical area. In various embodiments, the server processor 312 may generate the road map based on the first 2D training image data, the second 2D training image data and the third 2D training image data.

In some embodiments, there may be one or more vehicles 301. There may be one or more image acquisition apparatus 320 mounted on the one or more vehicles 301.

In various embodiments, the first map images, the second map images and the third map images may be obtained by the same image acquisition apparatus 320 or different image acquisition apparatus 320.

While the invention has been particularly shown and described with reference to specific embodiments, it should be understood by those skilled in the art that various changes in form and detail may be made therein without departing from the scope of the invention as defined by the appended claims.

## Claims

1. A system (200) for generating road map data, the system comprising:
one or more processor(s) (212); and
a memory (216) having instructions stored therein, the instructions, when executed by the one or more processor(s) (212), cause the one or more processor(s) (212) to:
collect first 2D map image data comprising first map images of a geographical area acquired by a first image acquisition apparatus (220A);
collect second 2D map image data comprising second map images of the geographical area acquired by a second image acquisition apparatus (220B);
construct a 3D map for the geographical area based on the first map image data and the second map image data;
determine a likelihood of a potential missing feature in the 3D map based on the first 2D map image data and the second 2D map image data;
collect third 2D map image data comprising third map images of the geographical area acquired by a third image acquisition apparatus (220C) if the likelihood of the potential missing feature is above a predetermined threshold; and
generate the road map based on the first 2D map image data, the second 2D map image data and the third 2D map image data;
wherein at least one of the first image acquisition apparatus (220A) and the second image acquisition apparatus (220B) acquires images at a lower image resolution than the third image acquisition apparatus (220C).

2. The system (200) of claim 1, wherein the third image acquisition apparatus (220C) is a 3D camera.

3. The system (200) of claim 1 or 2, wherein the one or more processor(s) (212) is configured to:
use sensor data to identify a first position of the first image acquisition apparatus (220A) and a second position of the second image acquisition apparatus (220B) to determine a difference between the first position and the second position.

4. The system (200) of claim 3, wherein the one or more processor(s) (212) is configured to:
construct the 3D map for the geographical area based on the first 2D map image data, the second 2D map image data and the difference between the first position and the second position.

5. The system (200) of any one of the preceding claims, wherein the one or more processor(s) (212) is configured to:
compare the 3D map with a groundtruth map stored in the memory (216) to determine the likelihood of the potential missing feature.

6. The system (200) of any one of the preceding claims, wherein the potential missing feature is one of: a building, a traffic sign or a traffic light.

7. The system (200) of any one of the preceding claims, wherein the one or more image acquisition apparatus (220) is mounted onto one or more vehicles or one or more drivers of the one or more vehicles.

8. A method (100) for generating road map data, the method (100) comprising using one or more processor(s) (212) to:
collect first 2D map image data comprising first map images of a geographical area acquired by a first image acquisition apparatus (102);
collect second 2D map image data comprising second map images of the geographical area acquired by a second image acquisition apparatus (104);
construct a 3D map for the geographical area based on the first map image data and the second map image data (106);
determine a likelihood of a potential missing feature in the 3D map based on the first 2D map image data and the second 2D map image data (108);
collect third 2D map image data comprising third map images of the geographical area acquired by a third image acquisition apparatus (220C) if the likelihood of the potential missing feature is above a predetermined threshold (110); and
generate the road map based on the first 2D map image data, the second 2D map image data and the third 2D map image data (112);
wherein at least one of the first image acquisition apparatus (220A) and the second image acquisition apparatus (220B) acquires images at a lower image resolution than the third image acquisition apparatus (220C).

9. The method (100) of claim 8, wherein the third image acquisition apparatus (220C) is a 3D camera.

10. The method (100) of claim 8 or 9, wherein the one or more processor(s) (212) is configured to:
use sensor data to identify a first position of the first image acquisition apparatus (220A) and a second position of the second image acquisition apparatus (220B) to determine a difference between the first position and the second position.

11. The method (100) of claim 10, wherein the one or more processor(s) (212) is configured to:
construct the 3D map for the geographical area based on the first 2D map image data, the second 2D map image data and the difference between the first position and the second position.

12. The method (100) of any one of claims 8 to 11, wherein the one or more processor(s) (212) is configured to:
compare the 3D map with a groundtruth map stored in the memory to determine the likelihood of the potential missing feature.

13. The method (100) of any one of claims 8 to 12, wherein the potential missing feature is one of: a building, a traffic sign or a traffic light.

14. The method (100) of any one of claims 8 to 13, wherein the one or more image acquisition apparatus (220) is mounted onto one or more vehicles or one or more drivers of the one or more vehicles.

15. A non-transitory computer-readable medium storing computer executable code comprising instructions for generating a road map data according to the method (100) of any one of claims 8 to 14.

## Patentansprüche

1. System (200) zum Erzeugen von Straßenkartendaten, das System aufweisend:
einen oder mehrere Prozessoren (212); und
einen Speicher (216) mit darin gespeicherten Anweisungen, wobei die Anweisungen, wenn sie von dem einen oder den mehreren Prozessoren (212) ausgeführt werden, den einen oder die mehreren Prozessoren (212) veranlassen zum:
Sammeln erster 2D-Kartenbilddaten, die erste Kartenbilder eines geografischen Gebiets aufweisen, die von einer ersten Bildaufnahmevorrichtung (220A) erfasst wurden;
Sammeln von zweiten 2D-Kartenbilddaten, die zweite Kartenbilder des geografischen Gebiets aufweisen, die von einer zweiten Bildaufnahmevorrichtung (220B) erfasst wurden;
Erstellen einer 3D-Karte für das geografische Gebiet auf der Grundlage der ersten Kartenbilddaten und der zweiten Kartenbilddaten;
Ermitteln einer Wahrscheinlichkeit eines potenziell fehlenden Merkmals in der 3D-Karte auf der Grundlage der ersten 2D-Kartenbilddaten und der zweiten 2D-Kartenbilddaten;
Sammeln von dritten 2D-Kartenbilddaten, die dritte Kartenbilder des geografischen Gebiets aufweisen, die von einer dritten Bildaufnahmevorrichtung (220C) erfasst wurden, wenn die Wahrscheinlichkeit des potenziell fehlenden Merkmals über einem vordefinierten Schwellenwert liegt; und
Erzeugen der Straßenkarte auf der Grundlage der ersten 2D-Kartenbilddaten, der zweiten 2D-Kartenbilddaten und der dritten 2D-Kartenbilddaten;
wobei mindestens eine der ersten Bildaufnahmevorrichtung (220A) und der zweiten Bildaufnahmevorrichtung (220B) Bilder mit einer niedrigeren Bildauflösung aufnimmt als die dritte Bildaufnahmevorrichtung (220C).

2. System (200) nach Anspruch 1, wobei die dritte Bildaufnahmevorrichtung (220C) eine 3D-Kamera ist.

3. System (200) nach Anspruch 1 oder 2, wobei der eine oder die mehreren Prozessoren (212) eingerichtet sind, zum:
Verwenden von Sensordaten zum Identifizieren einer ersten Position der ersten Bildaufnahmevorrichtung (220A) und einer zweiten Position der zweiten Bildaufnahmevorrichtung (220B), um eine Differenz zwischen der ersten Position und der zweiten Position zu ermitteln.

4. System (200) nach Anspruch 3, wobei der eine oder die mehreren Prozessoren (212) eingerichtet sind, zum:
Erstellen der 3D-Karte für das geografische Gebiet auf der Grundlage der ersten 2D-Kartenbilddaten, der zweiten 2D-Kartenbilddaten und der Differenz zwischen der ersten Position und der zweiten Position.

5. System (200) nach einem der vorstehenden Ansprüche, wobei der eine oder die mehreren Prozessoren (212) eingerichtet sind, zum:
Vergleichen der 3D-Karte mit einer im Speicher (216) gespeicherten Ground-Truth-Karte, um die Wahrscheinlichkeit des potenziell fehlenden Merkmals zu ermitteln.

6. System (200) nach einem der vorstehenden Ansprüche, wobei das potenziell fehlende Merkmal eines der folgenden ist: ein Gebäude, ein Verkehrszeichen oder eine Ampel.

7. System (200) nach einem der vorstehenden Ansprüche, wobei die eine oder mehreren Bildaufnahmevorrichtung(en) (220) an einem oder mehreren Fahrzeugen oder einem oder mehreren Fahrern des einen Fahrzeuges oder der mehreren Fahrzeuge angebracht sind.

8. Verfahren (100) zum Erzeugen von Straßenkartendaten, das Verfahren (100) aufweisend die Verwendung eines oder mehrerer Prozessoren (212) zum:
Sammeln erster 2D-Kartenbilddaten, die erste Kartenbilder eines geografischen Gebiets aufweisen, die von einer ersten Bildaufnahmevorrichtung (220A) erfasst wurden;
Sammeln von zweiten 2D-Kartenbilddaten, die zweite Kartenbilder des geografischen Gebiets aufweisen, die von einer zweiten Bildaufnahmevorrichtung (220B) erfasst wurden;
Erstellen einer 3D-Karte für das geografische Gebiet auf der Grundlage der ersten Kartenbilddaten und der zweiten Kartenbilddaten;
Ermitteln einer Wahrscheinlichkeit eines potenziell fehlenden Merkmals in der 3D-Karte auf der Grundlage der ersten 2D-Kartenbilddaten und der zweiten 2D-Kartenbilddaten;
Sammeln von dritten 2D-Kartenbilddaten, die dritte Kartenbilder des geografischen Gebiets aufweisen, die von einer dritten Bildaufnahmevorrichtung (220C) erfasst wurden,
wenn die Wahrscheinlichkeit des potenziell fehlenden Merkmals über einem vordefinierten Schwellenwert liegt; und
Erzeugen der Straßenkarte auf der Grundlage der ersten 2D-Kartenbilddaten, der zweiten 2D-Kartenbilddaten und der dritten 2D-Kartenbilddaten;
wobei mindestens eine der ersten Bildaufnahmevorrichtung (220A) und der zweiten Bildaufnahmevorrichtung (220B) Bilder mit einer niedrigeren Bildauflösung aufnimmt als die dritte Bildaufnahmevorrichtung (220C).

9. Verfahren (100) nach Anspruch 8, wobei die dritte Bildaufnahmevorrichtung (220C) eine 3D-Kamera ist.

10. Verfahren (100) nach Anspruch 8 oder 9, wobei der eine oder die mehreren Prozessoren (212) eingerichtet sind, zum:
Verwenden von Sensordaten zum Identifizieren einer ersten Position der ersten Bildaufnahmevorrichtung (220A) und einer zweiten Position der zweiten Bildaufnahmevorrichtung (220B), um eine Differenz zwischen der ersten Position und der zweiten Position zu ermitteln.

11. Verfahren (100) nach Anspruch 10, wobei der eine oder die mehreren Prozessoren (212) eingerichtet sind, zum:
Erstellen der 3D-Karte für das geografische Gebiet auf der Grundlage der ersten 2D-Kartenbilddaten, der zweiten 2D-Kartenbilddaten und der Differenz zwischen der ersten Position und der zweiten Position.

12. Verfahren (100) nach einem der Ansprüche 8 bis 11, wobei der eine oder die mehreren Prozessoren (212) eingerichtet sind, zum:
Vergleichen der 3D-Karte mit einer im Speicher (216) gespeicherten Ground-Truth-Karte, um die Wahrscheinlichkeit des potenziell fehlenden Merkmals zu ermitteln.

13. Verfahren (100) nach einem der Ansprüche 8 bis 12, wobei das potenziell fehlende Merkmal eines der folgenden ist: ein Gebäude, ein Verkehrszeichen oder eine Ampel.

14. Verfahren (100) nach einem der Ansprüche 8 bis 13, wobei die eine oder mehreren Bildaufnahmevorrichtung(en) (220) an einem oder mehreren Fahrzeugen oder einem oder mehreren Fahrern des einen Fahrzeuges oder der mehreren Fahrzeuge angebracht sind.

15. Nichtflüchtiges, computerlesbares Medium, das einen computerausführbaren Code aufweist, der Anweisungen zum Erzeugen von Straßenkartendaten gemäß dem Verfahren (100) nach einem der Ansprüche 8 bis 14 aufweist.

## Revendications

1. Système (200) pour générer des données de carte routière, le système comprenant :
un ou plusieurs processeurs (212) ; et
une mémoire (216) comprenant des instructions stockées dans celle-ci, les instructions, lorsqu'elles sont exécutées par ledit un ou lesdits plusieurs processeurs (212), amenant ledit un ou lesdits plusieurs processeurs (212) à :
collecter des premières données d'images cartographiques 2D comprenant des premières images cartographiques d'une zone géographique acquises par un premier appareil d'acquisition d'images (220A) ;
collecter les deuxièmes données d'images cartographiques 2D comprenant des deuxièmes images cartographiques de la zone géographique acquises par un deuxième appareil d'acquisition d'images (220B) ;
construire une carte 3D pour la zone géographique sur la base des premières données d'images cartographiques et des deuxièmes données d'images cartographiques ;
déterminer une probabilité d'une caractéristique manquante potentielle dans la carte 3D sur la base des premières données d'images cartographiques 2D et des deuxièmes données d'images cartographiques 2D ;
collecter des troisièmes données d'images cartographiques 2D comprenant des troisièmes images cartographiques de la zone géographique acquises par un troisième appareil d'acquisition d'images (220C) si la probabilité de la caractéristique manquante potentielle est supérieure à un seuil prédéterminé ; et
générer la carte routière sur la base des premières données d'images cartographiques 2D, des deuxièmes données d'images cartographiques 2D et des troisièmes données d'images cartographiques 2D ;
dans lequel au moins l'un parmi le premier appareil d'acquisition d'images (220A) et le deuxième appareil d'acquisition d'images (220B) acquiert des images à une résolution d'image inférieure à celle du troisième appareil d'acquisition d'images (220C).

2. Système (200) selon la revendication 1, dans lequel le troisième appareil d'acquisition d'images (220C) est une caméra 3D.

3. Système (200) selon la revendication 1 ou 2, dans lequel ledit un ou lesdits plusieurs processeurs (212) est/sont configurés pour :
utiliser des données de capteur pour identifier une première position du premier appareil d'acquisition d'images (220A) et une deuxième position du deuxième appareil d'acquisition d'images (220B) afin de déterminer une différence entre la première position et la deuxième position.

4. Système (200) selon la revendication 3, dans lequel ledit un ou lesdits plusieurs processeurs (212) est/sont configurés pour :
construire la carte 3D pour la zone géographique sur la base des premières données d'images cartographiques 2D, des deuxièmes données d'images cartographiques 2D et de la différence entre la première position et la deuxième position.

5. Système (200) selon l'une quelconque des revendications précédentes, dans lequel ledit un ou lesdits plusieurs processeurs (212) est/sont configurés pour :
comparer la carte 3D avec une carte de réalité de terrain stockée dans la mémoire (216) afin de déterminer la probabilité de la caractéristique manquante potentielle.

6. Système (200) selon l'une quelconque des revendications précédentes, dans lequel la caractéristique potentiellement manquante est l'un parmi un bâtiment, un panneau de signalisation ou un feu de signalisation.

7. Système (200) selon l'une quelconque des revendications précédentes, dans lequel ledit un ou lesdits plusieurs appareils d'acquisition d'images (220) est/sont montés sur un ou plusieurs véhicules ou sur un ou plusieurs conducteurs dudit un ou desdits plusieurs véhicules.

8. Procédé (100) pour générer des données de carte routière, le procédé (100) comprenant l'utilisation d'un ou de plusieurs processeurs (212) pour :
collecter des premières données d'images cartographiques 2D comprenant des premières images cartographiques d'une zone géographique acquises par un premier appareil d'acquisition d'images (102) ;
collecter des deuxièmes données d'images cartographiques 2D comprenant des deuxièmes images cartographiques de la zone géographique acquises par un deuxième appareil d'acquisition d'images (104) ;
construire une carte 3D pour la zone géographique sur la base des premières données d'images cartographiques et des deuxièmes données d'images cartographiques (106) ;
déterminer une probabilité d'une caractéristique manquante potentielle dans la carte 3D sur la base des premières données d'images cartographiques 2D et des deuxièmes données d'images cartographiques 2D (108) ;
collecter des troisièmes données d'images cartographiques 2D comprenant des troisièmes images cartographiques de la zone géographique acquises par un troisième appareil d'acquisition d'images (220C) si la probabilité de la caractéristique manquante potentielle est supérieure à un seuil prédéterminé (110) ; et
générer la carte routière sur la base des premières données d'images cartographiques 2D, des deuxièmes données d'images cartographiques 2D et des troisièmes données d'images cartographiques 2D (112) ;
dans lequel au moins l'un parmi le premier appareil d'acquisition d'images (220A) et le deuxième appareil d'acquisition d'images (220B) acquiert des images à une résolution d'image inférieure à celle du troisième appareil d'acquisition d'images (220C).

9. Procédé (100) selon la revendication 8, dans lequel le troisième appareil d'acquisition d'images (220C) est une caméra 3D.

10. Procédé (100) selon la revendication 8 ou 9, dans lequel ledit un ou lesdits plusieurs processeurs (212) est/sont configurés pour :
utiliser des données de capteur pour identifier une première position du premier appareil d'acquisition d'images (220A) et une deuxième position du deuxième appareil d'acquisition d'images (220B) afin de déterminer une différence entre la première position et la deuxième position.

11. Procédé (100) selon la revendication 10, dans lequel ledit un ou lesdits plusieurs processeurs (212) est/sont configurés pour :
construire la carte 3D pour la zone géographique sur la base des premières données d'images cartographiques 2D, des deuxièmes données d'images cartographiques 2D et de la différence entre la première position et la deuxième position.

12. Procédé (100) selon l'une quelconque des revendications 8 à 11, dans lequel ledit un ou lesdits plusieurs processeurs (212) est/sont configurés pour :
comparer la carte 3D avec une carte de réalité de terrain stockée dans la mémoire afin de déterminer la probabilité de la caractéristique manquante potentielle.

13. Procédé (100) selon l'une quelconque des revendications 8 à 12, dans lequel la caractéristique manquante potentielle est l'un parmi un bâtiment, un panneau de signalisation ou un feu de signalisation.

14. Procédé (100) selon l'une quelconque des revendications 8 à 13, dans lequel ledit un ou lesdits plusieurs appareils d'acquisition d'images (220) est/sont montés sur un ou plusieurs véhicules ou sur un ou plusieurs conducteurs dudit un ou desdits plusieurs véhicules.

15. Support non transitoire lisible par ordinateur stockant un code exécutable par ordinateur comprenant des instructions pour générer des données de carte routière selon le procédé (100) de l'une quelconque des revendications 8 à 14.
